# EUROPEAN PATENT APPLICATION

(11) **EP 1 772 064 A1**
(43) Date of publication of application: **11.04.2007**
(21) Application number: 05077305.0
(22) Date of filing: 10.10.2005
(51) Int. Cl.: A23L 1/217, A23L 1/18, A23L 1/164, A23L 1/00

(54) **Method for preparing a snack product and snack product obtainable by said method**

(71) Applicant: Nederlandse Organisatie voor Toegepast-Natuurwetenschappelijk Onderzoek TNO, 2628 VK Delft (NL)
(72) Inventor: Don, Johannes Andreas Clyde, 6871 TM Renkum (NL); Woortman, Albert Jan Jacob, 9646 DA Veendam (NL)
(74) Representative: Winckels, Johannes Hubertus F.

(57) **Abstract**

The invention provides a method for preparing a snack product, in which method a semi finished snack starch-containing product that is contained under reduced pressure in a container is subjected to a heat treatment until the semi finished snack product has expanded. The invention also provides a packaged semi finished snack product, which snack product is contained under reduced pressure in a container.

## Description

The present invention relates to a method for preparing a snack product, and a packaged semi finished snack product.

Many snack products such as potato chips are prepared from pre-formed semi finished starch-containing snack products, so-called pellets. These pellets have a long shelf-life and are normally prepared by passing a mixture of ingredients including starch and water through a cooking extruder where the mixture is cooked and formed into a dense semi finished product. The product so obtained will be allowed to dry to ensure a long shelf-life. Finished snack products are usually prepared by consumers by deep-frying the semi finished snack product in an oil whereby an expanded snack product is obtained. A disadvantage of the snack products so prepared is that they have a high fat content because the snack products absorb a substantial amount of oil during the finish-frying process, which is from health perspective most undesirable. To deal with this problem alternative finishing processes have been developed. In, for example, WO 96/33624 a finishing process has been described wherein a starch-containing pellet which is provided with a coating formed by oil or fat is subjected to a heat treatment in a microwave oven, upon which expansion of the pellet occurs. Although, the snack products prepared in accordance with WO 96/33624 contain much less fat than products obtained by way of finish-frying, there is still much room for improvement. In addition, also from expansion perspective there is room for improvement since the snack products thus obtained still have row edges, especially when the snack product has a relatively complicated shape.

Object of the present invention is to provide a method for preparing snack products which constitutes both from health and expansion perspective an improvement over the known processes.

Surprisingly, it has now been found that this can be established when the semi finished snack product to be heated is contained in a container under reduced pressure.

Accordingly, the present invention relates to a method for preparing a snack product, in which method a semi finished starch-containing snack product that is contained under reduced pressure in a container is subjected to a heat treatment until the semi finished snack product has expanded.

The finished snack products prepared in accordance with the present invention have a very low fat content whilst in addition they display an excellent expansion capacity in the sense that row edges can in essence be avoided.

A further advantage of the present invention over WO 96/33624 is that the present semi finished snack products do not need to contain a coating which is formed by oil or a fat.

It will be understood that the expansion of the snack product will occur due to the pressure that is generated inside the snack product during the heat treatment. This means that during the heating of the semi finished snack product the pressure will increase inside the container, eventually resulting in a positive pressure.

Preferably, the semi finished snack product is contained in the container at a pressure in the range of from 0.01 to 0.5 bar, more preferably at a pressure is in the range of from 0.02 to 0.5 bar.

The water content of the semi finished starch-containing snack product may vary considerably. Suitably, the water content of the semi finished snack starch-containing snack product is in the range of from 1 to 25 wt%, based on total semi finished snack product. Preferably, the semi finished snack product has a water content of 2 to 20 wt%, more preferably 3 to 15 wt%, and most preferably 5 to 13 wt%, based on total semi finished snack product.

The heating of the semi finished starch-containing snack product can be conducted by a variety of ovens, including conventional ovens, hot air ovens, steam ovens, combi ovens and microwave ovens. Preferably, use is made of a microwave oven.

In accordance with the method according to the present invention, the heat treatment is suitably be carried out at a temperature in the range of from 140 to 210°C, preferably at a temperature in the range of from 170 to 195°C.

The semi finished starch-containing snack product will usually be made from a material which comprises starch and water. Suitably, the starch can be selected from the group consisting of potato, maize, tapioca, rice, corn starch or any mixture thereof. The material may in addition comprise ingredients such as salt, flavourings, colour additives, spices, sugar, and so forth.

The semi finished snack product to be used in accordance with the present invention suitably comprises 20-75 wt% of a starch, preferably in the range of from 25 to 70 wt%, based on total semi finished snack product.

The semi finished snack product to be used in accordance with the present invention can be chosen from a variety of snack products. Suitable potato sticks, potato twists or tubes, corn curls. Potato sticks and potato twists or tubes will usually comprise potato powder, potato flour or potato grits in an amount in the range of from 25 - 70 wt%, based on total weight of the semi finished snack product, and a food grade potato starch that is suitable for expanded snack product in an amount in the range of from 20 - 70 wt%, based on total semi finished snack product. Minor ingredients can be salt in an amount in the range of from 0 - 2 wt%, based on total semi finished snack product, and other technical additives such as, for example, modified starch. Pellets of such mixtures can suitably be formed in an extruder or press, and subsequently dried to an appropriate moisture content which usually ranges from 8-12 w%. The final snack product, i.e. the expanded snack will be prepared at home in the micro-wave. The use of the package under reduced pressure ensures a full and homogeneous expansion. Seasonings and oil can be added at the costumers' own desire. The package could, for instance, be adapted to contain a small package of oil and seasonings.

The base formulation of corn-based semi finished snack products in accordance with the present invention suitably comprises corn flour, corn grits or corn powder in an amount in the range of from 25-100 wt%, based on total semi finished snack product. The corn material can suitably be mixed with a potato, corn or wheat starch. Such semi finished snack products may suitably comprise 25-100 wt % of a corn material and 0-75 wt% of a starch material 0-75%, both based on total semi finished snack product. In addition, heat flour may suitably be added in an amount in the range of from 0-20 wt %, based on total semi finished snack product. Pellets of such corn-based semi finished snack products can be expanded in a microwave to obtain freshly prepared snack product.

Wheat starch, wheat flour, rice flour and rice starch can also suitably be used in snack formulations. Mixtures that comprise such materials can be pelletized or pressed. Such mixtures can suitably be combined with shrimp or soy sauce to prepare typical Asian type snack products.

The semi finished snack product to be used in accordance with the present invention may have any desired shape. Suitable shapes include lattices, wheels, sheets or any fantasy figures.

The present invention also relates to a snack product obtainable by the method according to the present invention. Such a snack product has the advantage that is expands in a homogeneous manner when it is subjected to the heat treatment. In addition, the shell life of the snack product is advantageously extended, whereas at the same time the snack product requires less storage space. Further, the oil content of the snack product can attractively controlled by the end-user who can add oil and seasoning at his or her own will. Moreover, the snack product in accordance with the present invention can freshly be prepared by means of a microwave, ensuring a crispy and savoury perception. The above advantages are clearly not perceived with snack pellets that have been industrially deep-fat fried, expanded and bagged.

The container to be used in accordance with the present invention is suitably made of a plastic laminate. It will be understood that for the purposes of the present invention the container needs to be heat-resistant and air-tight. In order to allow one to monitor the progress of the finishing process the container is suitably fully or partly transparent.

Suitably, the container comprises a bag. Such a bag can be made using conventional methods.

Suitably, the plastic laminate comprises polyethylene and/or polypropylene.

The present invention also relates to a packaged semi finished snack starch-containing product, which snack product is contained under reduced pressure in a container. Preferably, the container is a container as defined hereinabove.

### Examples

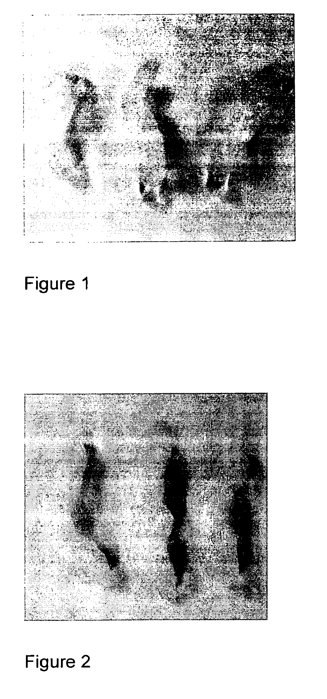

A 65.5 wt% (dry matter basis) potato starch is mixed with processing agents and water. After storage overnight in a closed plastic bag the mixture was extruded in a Haake PolyLab System extruder with single screw at 87 °C. After extrusion the extrudate was cut in pieces and dried in an oven to about 10% moisture. Part of the product pieces were placed under atmospheric conditions in a 100 ml round bottom flask with a stopcock, whereas another part of the product pieces were placed in a similar flask under reduced pressure of about 0.1 bar created with a vacuum pump. The product pieces were then heated in a microwave oven with a microwave capacity of 700 W. The product pieces that expanded in a microwave oven at atmospheric conditions did contain not-expanded ends (see Figure 1), whereas the product pieces treated in the microwave oven at reduced pressure did expand more uniformly (see Figure 2), resulting in a more attractive product.

## Claims

1. A method for preparing a snack product, in which method a semi finished starch-containing snack product that is contained under reduced pressure in a container is subjected to a heat treatment until the semi finished snack product has expanded.

2. A method according to claim 1, wherein the semi finished snack product is contained in the container at a pressure in the range of from 0.01 to 0.5 bar.

3. A method according to claim 2, wherein the pressure is in the range of from 0.02 to 0.5 bar.

4. A method according to any one of claims 1-3, wherein the semi finished snack product has a water content of 1 to 25 % by weight, based on total semi finished snack product.

5. A method according to any one of claims 1-4, wherein the semi finished snack product has a water content of 2 to 20 % by weight, based on total semi finished snack product.

6. A method according to any one of claims 1-5, wherein the semi finished snack product comprises starch in an amount in the range of from 20 to 75 wt%, based on total semi finished snack product.

7. A method according to any one of claims 1-5, wherein the semi finished snack product comprises starch in an amount in the range of from 25 to 75 wt%, based on total semi finished snack product.

8. A method according to any one of claims 1-7, wherein the semi finished snack product further comprises potato powder, potato flour or potato grids in an amount in the range of from 25-75 wt%, based on total semi finished snack product, or corn flour, corn grits or corn powder in an amount in the range of from 25-100 wt%, based on total semi finished snack product.

9. A method according to any one of claims 1-8, wherein the semi finished snack product is heated during the heat treatment to a temperature in the range of from 140 to 210°C.

10. A method according to claim 9, wherein the semi finished snack product is heated during the heat treatment to a temperature in the range of from 170 to 195°C.

11. A method according to any one of claims 1-10, wherein the heat treatment is carried out by means of a microwave oven.

12. A method according to any one of claims 1-11, wherein the semi finished starch-containing snack product comprises a starch which is selected from the group consisting of potato, maize, tapioca, rice, corn starch or any mixture thereof.

13. A method according to claim 12, wherein the starch is a potato starch.

14. A method according to any one of claims 1-13, wherein the container is made of a plastic laminate.

15. A method according to the container is fully or partly transparent.

16. A method according to any one of claims 1-15, wherein the container is a bag.

17. A packaged semi finished starch-containing snack product which is contained under reduced pressure in a container, which snack product has been defined in any one of claims 4-8.

18. A packaged semi finished snack product according to claim 17, wherein the container is a container as defined in any one of claims 14-16.

19. A snack product obtainable by a method as defined in any one of claims 1-16.
